# EUROPÄISCHE PATENTSCHRIFT

(11) **EP 0 456 770 B1**
(45) Veröffentlichungstag und Bekanntmachung des Hinweises auf die Patenterteilung: **12.01.1994**
(21) Anmeldenummer: 90914144.2
(22) Anmeldetag: 05.09.1990
(51) Int. Cl.: B60T 13/52, B60T 8/32

(54) **BREMSKRAFTVERSTÄRKER FÜR BREMSSYSTEME MIT ANTIBLOCKIER- UND/ODER ANTRIEBSSCHLUPFREGELUNG**
BRAKE POWER BOOSTER FOR BRAKE SYSTEMS WITH ANTI-LOCK AND/OR TRACTION SLIP CONTROL
SERVO-FREIN A DEPRESSION POUR SYSTEMES DE FREINAGE AVEC REGULATION ANTIBLOCAGE ET/OU ANTIPATINAGE A L'ENTRAINEMENT

(30) Priorität: 02.12.1989 DE 3939978; 09.02.1990 DE 4003957
(43) Veröffentlichungstag der Anmeldung: 21.11.1991
(73) Patentinhaber: ALFRED TEVES GmbH, 60441 Frankfurt (DE)
(72) Erfinder: GRAICHEN, Kai-Michael, D-6070 Langen (DE); KORNAS, Christof, D-6200 Wiesbaden (DE)
(86) Internationale Anmeldenummer: EP9001485
(87) Internationale Veröffentlichungsnummer: WO9108131

(56) Entgegenhaltungen:
- DE-A- 3 808 523
- DE-A- 3 815 768
- GB-A- 2 161 229
- GB-A- 2 197 402
- US-A- 4 365 538

## Beschreibung

Die Erfindung betrifft einen Vakuumbremskraftverstärker für Bremssysteme mit Antiblockier- und Antriebsschlupfregelung, der einen Servozylinder und einen Servokolben innerhalb des Servozylinders umfaßt, wobei in der Wand des Servozylinders ein Anschlußkörper für ein fluidisches Servomedium angeordnet ist und die Stellung des Servokolbens im Servozylinder durch eine Sensiervorrichtung festgestellt wird.

Gattungsmäßig gehört der Gegenstand der Erfindung einerseits zu den bekannten Vakuumbremskraftverstärkern, wie sie beispielsweise im Bremsenhandbuch der Alfred Teves GmbH, 8. Auflage, beschrieben werden. Siehe dort Seite 94 ff.

Andererseits gehört der Gegenstand der Erfindung gattungsgemäß zu Bremsanlagen, die mit einer Antiblockier- und/oder Antriebsschlupfregelung ausgestattet sind.

Ein pneumatischer Bremskraftverstärker für ein Bremssystem, das eine Antiblockierregelung und/oder eine Antriebsschlupfregelung umfaßt, wird beispielsweise in der deutschen Offenlegungsschrift P 38 15 768.3 beschrieben.

Durch dieses Dokument ist im einzelnen ein pneumatischer Bremskraftverstärker, insbesondere Unterdruckbremskraftverstärker, für eine Bremsdruckregelvorrichtung,
insbesondere Antiblockierregelvorrichtung (ABS-Vorrichtung), Antriebsschlupfregelvorrichtung (ASR-Vorrichtung), für Kraftfahrzeuge mit einem Hauptzylinder, mit Radzylindern, mit mindestens einer Pumpe zur Positionierung mindestens eines Kolbens des Hauptzylinders, mit einem Druckmodulator, der den Druck in den Radzylindern während des Regelmodus moduliert und einem elektronischen Regler, der Radsensorsignale zu Stellsignalen für die Durchlassund Sperrventile des Druckmodulators verarbeitet, wobei der Verstärker ein Gehäuse, ein Kolbenelement, insbesondere ein Membranteller und eine Membran, vorzugsweise eine Rollmembran umfasst, die das Kolbenelement und das Gehäuse abdichtend miteinander verbindet und Bewegungen des Kolbenelements relativ zum Gehäuse zuläßt und wobei das Kolbenelement in Wirkverbindung mit dem Bremspedal steht, bekannt geworden.

In dieser deutschen Patentanmeldung wird vorgeschlagen, daß das Gehäuse, das Kolbenelement, insbesondere der Membranteller, und die Membran, vorzugsweise die Rollmembran, als Teil eines Wegschalters für die Steuerung der Pumpe, insbesondere über den elektronischen Regler ausgebildet sind.

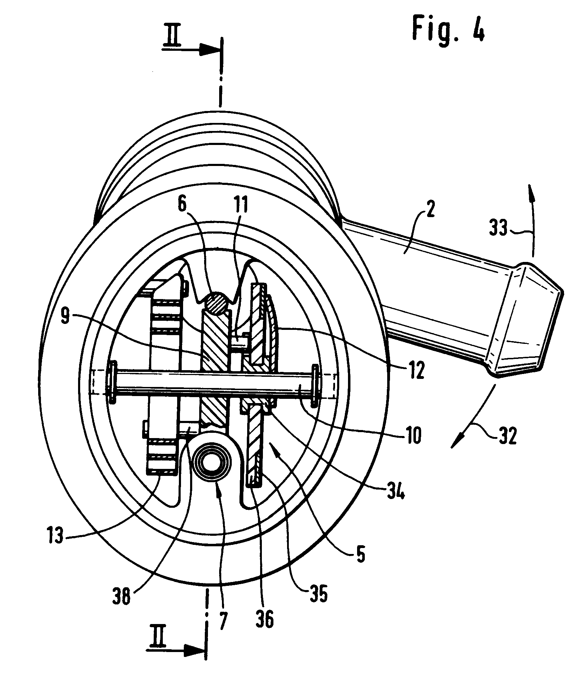

Aus Figur 4 dieser Patentanmeldung geht hervor, daß ein Wegaufnehmergehäuse für einen Wegsensor 64 über die äußere Kontur des Vakuumbremskraftverstärkers hinausragt.

Aus der britischen Anmeldung GB 2 197 402 ist eine blockiergeschützte Bremsanlage mit einem Unterdruckbremskraftverstärker bekannt, der mittels eines nicht gezeigten Unterdruckanschlusses an eine geeignete Unterdruckquelle angeschlossen ist. Die Bewegung der beweglichen Wand des Unterdruckbremskraftverstärkers wird durch einen Wegschalter sensiert, dessen Ausgangssignale über einen elektronischen Regler die Drehzahl eines Elektromotors beeinflussen, der eine als Hilfsenergie benutzte hydraulische Pumpe antreibt.

Die britische Anmeldung GB 2 161 229 offenbart einen pneumatisch-hydraulischen Bremskraftverstärker, der aus einem pneumatischen Zylinder sowie einem ihm nachgeschalteten Hauptzylinder besteht. Der Verstärkerkolben des pneumatischen Zylinders wirkt mit einem Hubdetektor zusammen, der durch ein zylindrisches Schutzteil vor Spritzwasser und Verunreinigung geschützt wird.

Als nachteilig ist bei den Gegenständen der genannten britischen Anmeldungen die Tatsache anzusehen, das sowohl das Wegschaltergehäuse beim Gegenstand der erstgenannten Anmeldung, als auch das zylindrische Schutzteil (GB 2 161 229) über die Außenkontur des Unterdruckbremskraftverstärkers bzw. des pneumatischen Zylinders hinausragen.

Die Erfindung macht sich zur Aufgabe, dieses Herausragen des Wegaufnehmers aus der Kontur des Verstärkers zu beseitigen.

Der erfindungsgemäße Verstärker soll aufgrund seiner Außenkontur weitgehend universell einbaubar werden.

Vom Fahrzeughersteller werden für den Einbau von Bremskraftverstärkern immer wieder geänderte Einbauplätze vorgegeben. Dabei ändern sich der Ort, die Größe und die Gestalt der Einbauplätze.

Es gehört mit zu der Aufgabenstellung der vorliegenden Erfindung flexibel auf derartige Änderungen reagieren zu können, und zwar ohne großen Kostenaufwand.

Es soll also durch den erfindungsgemäßen Verstärker eine möglichst große Unabhängigkeit von dem Platzangebot seitens des Autoherstellers geschaffen werden.

Es soll weiterhin möglich sein, eine Vereinheitlichung der Verstärkergehäuse auf wenige Standardtypen zu erreichen. Der Einbauraumbedarf für den Verstärker soll grundsätzlich reduziert werden.

Die Empfindlichkeit des Vakuumbremskraftverstärkers gegenuber Beanspruchung beim Transport und Einbau, insbesondere verursacht durch das Herausragen des Wegaufnehmers soll vermieden werden.

Weiterhin gehört es zur Aufgabenstellung, die Austauschbarkeit und die Montage zu vereinfachen.

Es sollen weiterhin bauliche Voraussetzungen dafür geschaffen werden, daß der bekannte Vakuumstutzen und das bekannte Rückschlagventil zu einer kompakten Einheit mit dem Sensorgehäuse vereinigt werden können.

Die gestellten Aufgaben werden erfindungsgemäß dadurch gelöst, daß ein Teil der Wand des Servozylinders als Gehäuse für mindestens einen Teil der Sensiervorrichtung ausgebildet ist.

Bei einem Bremskraftverstärker mit einem Anschlusskörper für ein fluidisches Servomedium, der in der Wand des Servozylinders angeordnet ist, wird vorgeschlagen, daß die Sensiervorrichtung zumindest teilweise im Anschlusskörper untergebracht ist.

Dabei kann der Anschlusskörper als Gehäuse für mindestens einen Teil der Sensiervorrichtung ausgebildet sein.

In einem bevorzugten Ausführungsbeispiel wird vorgeschlagen, daß die Sensiervorrichtung aus einem Tastorgan für den Servokolben, das ein Getriebe betätigt, aus einem elektrischen Teil zur Erzeugung eines Sensorsignals (elektrischer Teil), das vom Getriebe betätigt wird, besteht, daß zumindest ein Teil der Führung für das Tastorgan, das Getriebe, und der elektrische Teil im Anschlusskörper untergebracht sind.

In weiterer Ausgestaltung dieses Ausführungsbeispiels kann vorgesehen werden, daß das Getriebe eine flexible Zahnstange und ein Zahnrad, die in Wirkverbindung miteinander stehen, umfasst.

Das Tastorgan kann einen Taststift, der die Stellung des Servokolbens abtastet und mit der flexiblen Zahnstange verbunden ist, und eine Teleskopvorrichtung zur Führung des Taststifts umfassen.

Um in einem bestimmten Bereich eine sichere Berührung zwischen Taststift und Servokolben zu gewährleisten, wird vorgeschlagen, daß ein Federorgan, insbesondere eine Spiralfeder, vorgesehen ist, die über das Getriebe den Taststift in Anschlag am Servokolben hält.

Der elektrische Teil der Sensiervorrichtung kann aus einem Drehpotentiometer bestehen, der durch das Zahnrad betätigt wird. Die nachfolgend beschriebene Grundplatte und das Zahnrad können einteilig ausgebildet sein.

Dieser Drehpotentiometer kann so aufgebaut sein, daß er eine aus elektrisch nichtleitendem Material bestehende Grundplatte, auf der ein insbesondere kreisbogenförmig (nicht geschlossener Kreis) ausgebildeter Ohmscher Widerstand angeordnet ist und ein mit dem Ohmschen Widerstand in körperlicher Berührung stehendes Abgreiforgan, das eine insbesondere kreisbogenförmige Bewegung relativ zum Ohmschen Widerstand ausführen kann, umfasst. In diesem Zusammenhang werden zwei Alternativen vorgeschlagen. Bei der ersten Alternative ist vorgesehen, daß das Abgreiforgan durch das Zahnrad relativ zur Grundplatte mit dem Ohmschen Widerstand verdrehbar angeordnet ist. Bei der zweiten Alternative ist die Grundplatte mit dem Ohmschen Widerstand durch das Zahnrad relativ zum Abgreiforgan verdrehbar angeordnet. Wenn das Material des Ohmschen Widerstands aus kraftübertragungsfähigem Material besteht, kann auf eine Grundplatte verzichtet werden.

Der Ohmsche Widerstand kann auch auf dem Zahnrad angeordnet sein.

Der vorzugsweise aus Kunststoff hergestellte, oben genannte Anschlusskörper kann als Gehäuse ausgebildet sein, in dem eine gemeinsame Welle für das Zahnrad und das Drehpotentiometer angeordnet ist. In diesem Gehäuse kann weiterhin eine Gleitschiene für die Zahnstange untergebracht, insbesondere eingeformt, sein.

Eine besonders kompakte Ausführung wird dadurch erzielt, daß der Anschlusskörper als Aufnahmeelement für das Vakuumrückschlagventil und/oder für den Vakuumanschlußstutzen ausgebildet ist. Dabei kann vorgesehen sein, daß der Vakuumanschlußstutzen im Anschlusskörper drehbar angeordnet ist.

Um eine Verdrehsicherung des Anschlusskörpers gegenüber dem Servozylinder zu erzielen, wird weiterhin vorgeschlagen, daß der Anschlusskörper im Bereich seiner Verbindung mit dem Servozylinder nichtkreisförmig, sondern elliptisch oder oval, ausgebildet ist. In einem weiteren Ausführungsbeispiel wird vorgesehen, daß der als Gehäuse ausgebildete Anschlusskörper so an einem Teil der Wand des Servozylinders angeordnet ist, daß der Taststift in Hinsicht auf die Achse des Bremskraftverstärkers achsparallele Bewegungen ausführt. Der Anschlusskörper kann kreisförmig ausgebildet sein. Eine Verdrehsicherung ist nicht zwingend notwendig. Eine kostengünstige Montage des Verstärkers wird dadurch erzielt, daß der Anschlußkörper an seinem äußeren Umfang und im Bereich der Verbindung mit der Öffnung in der Wand des Servozylinders mit einem vorzugsweise sägezahnförmigen Außenprofil aufweisendes Einknüpfbund versehen ist, daß ein elastischer Dichtstopfen zwischen der Öffnung in der Wand des Servozylinders und dem Einknüpfbund angeordnet ist.

Eine weitere vorteilhafte Weiterbildung des Erfindungsgegenstandes sieht vor, daß der Anschlußkörper als Unterdruck-Anschlußventil ausgebildet ist und einen in einen Unterdruckraum mündenden, in einem Ventilgehäuse angeordneten Ansaugkanal aufweist, in den ein beweglicher Teil des Lagesensors teleskopierend eingeführt ist und einen Teil des Ansaugkanalquerschnitts abdeckt. Durch den Ansaugkanal ist im Unterdruck-Anschlußventil bereits eine Öffnung vorhanden, in die der bewegliche Teil des Lagesensors ohne größere Schwierigkeiten eingeführt werden kann. Um den gleichen Strömungsquerschnitt für die aus dem Unterdruckraum strömende Luft bereitzuhalten, muß der Durchmesser des Ansaugkanals nur geringfügig vergrößert werden.

Mit Vorteil ist der bewegliche Teil zentral im Ansaugkanal angeordnet. Das Strömungsverhalten im Ansaugkanal ändert sich dadurch nur unwesentlich. Darüber hinaus ist man beim Einbau des Unterdruck-Anschlußventils nicht auf eine bestimmte Winkellage des Unterdruck-Anschlußventils in bezug auf das Verstärkergehäuse angewiesen. In jeder Winkellage befindet sich der bewegliche Teil in der gleichen Position.

In einer bevorzugten Ausführungsform ist im Unterdruck-Anschlußventil ein Aufnehmer angeordnet, der in Abhängigkeit von der Stellung des beweglichen Teils ein elektrisches Ausgangssignal erzeugt. Ein elektrisches Ausgangssignal läßt sich sehr einfach weitertransportieren und verarbeiten. Das elektrische Signal kann dabei auch berührungslos erzeugt werden, beispielsweise durch eine induktive, kapazitive oder optische Kopplung.

Bevorzugt ist dabei aber, daß der Aufnehmer als Widerstandsbahn ausgebildet ist, auf der ein von dem beweglichen Teil angetriebener Schleifer schleift. Der Lagesensor weist also ein Potentiometer auf, dessen Mittelabgriff von dem beweglichen Teil bewegt wird. Der Spannungsabfall zwischen dem Mittelabgriff und dem einen oder dem anderen Anschluß des Potentiometers läßt dann eine Aussage darüber zu, in welcher Position sich der bewegliche Teil des Lagesensors und damit die Membran befindet.

In einer anderen bevorzugten Ausführungsform weist der elektrische Aufnehmer mehrere elektrisch voneinander getrennte Kontaktflächen auf, die bei einer Bewegung des beweglichen Teils nacheinander mit einem vom beweglichen Teil angetriebenen beweglichen Kontakt in Berührung kommen. Damit läßt sich zwar eine kontinuierliche Auflösung der Stellung des beweglichen Teiles nicht mehr erreichen. Dies ist aber in der Regel auch gar nicht notwendig. Vielmehr reicht es für normale Anwendungszwecke aus, wenn man feststellen kann, ob sich der Membranteller in einem von mehreren Bereichen befindet. Durch die Anzahl der Kontaktflächen läßt sich die Auflösung beinflussen. Am Ausgang des Aufnehmers stehen dann diskrete Signale zur Verfügung, die beispielsweise auch digital weiterverarbeitet werden können.

In einer bevorzugten Ausführungsform ist der bewegliche Teil durch eine erste Feder in Richtung auf seine Ruhelage vorgespannt. Im beweglichen Teil ist ein Teleskopelement angeordnet, das von einer in die gleiche Richtung wirkende zweite Feder in seine Ruhelage vorgespannt ist, wobei die zweite Feder wesentlich härter als die erste Feder ist. Das Teleskopelement ragt dabei in der Ruhelage aus dem beweglichen Teil heraus und ist der Teil, auf den der Membranteller einwirkt. Wenn der Membranteller nun aufgrund einer Bewegung des Bremspedales in den Unterdruckraum hinein bewegt wird, wird zunächst der bewegliche Teil zusammen mit dem Teleskopelement gegen die Kraft der ersten Feder bewegt, weil die zweite Feder wesentlich härter als die erste Feder ist und praktisch eine starre Kopplung zwischen dem Teleskopelement und dem beweglichen Teil herstellt. Erst wenn der erste Teil an einem Anschlag angelangt ist, kann das Teleskopelement gegen die Kraft der zweiten Feder in den ersten Teil hinein getrieben werden. Dabei reicht es aus, wenn der Kontakt bzw. der Schleifer am beweglichen Teil angeordnet ist. Damit läßt sich zwar nicht mehr die gesamte Bewegung des Membrantellers von einer Endstellung in die andere erfassen; dies ist in der Regel aber auch nicht nötig. Vielmehr reicht es aus, die Stellung des Membrantellers nur in einem bestimmten Bereich zu erfassen. Jegliche darüber hinausgehende Bewegung des Bremspedals bzw. des Membrantellers ist für die weitere Verarbeitung ohne Belang.

In einer bevorzugten Ausführungsform weist das Unterdruck-Anschlußventil einen Ansaugstutzen auf, der unter einem vorbestimmten Winkel zum Ansaugkanal verläuft. wobei der Ansaugstutzen gegenüber dem Gehäuse verdrehbar ist. Der Ansaugstutzen steht also nicht senkrecht aus dem Gehäuse des Bremskraftverstärkers hervor. Vielmehr ist vorgesehen, daß er parallel oder unter einem kleinen Winkel beispielsweise zur Frontseite des Bremskraftverstärker-Gehäuses verläuft. Dies verringert den Platzbedarf und erleichtert die Montage eines Vakuum-Ansaugschlauchs, der beispielsweise vom Motor-Luftansaugstutzen zum Vergaser verläuft. Um zu verhindern, daß aufgrund des Ansaugstutzens das Unterdruck-Ansaugventil mit seinem Lagesensor nur in einer bestimmten Stellung in das Bremskraftverstärker-Gehäuse eingebaut werden kann, ist vorgesehen, daß der Ansaugstutzen gegenüber dem Ventilgehäuse verdrehbar ist. Unabhängig von der Einbaulage kann man nun dafür sorgen, daß der Ansaugstutzen immer in die gleiche Richtung weist.

Gleiches gilt für eine Ausführungsform, bei der eine elektrische Anschlußvorrichtung vorgesehen ist, die am Ventilgehäuse befestigt und in ihrer Befestigungslage gegenüber dem Ventilgehäuse verdrehbar ist. Die Einbaulage des Unterdruck-Anschlußventils ist nun auch unabhängig von der Lage der elektrischen Leitungen, die zur elektrischen Versorgung des Lagesensors und zur Informationsübermittlung von Lagesensor am Unterdruck-Anschlußventil angeschlossen sein müssen.

Dabei ist es bevorzugt, daß das Ventilgehäuse mehrere Schleifringe aufweist, die mit dem Aufnehmer elektrisch verbunden sind, und die Anschlußvorrichtung eine entsprechende Anzahl von darauf anliegenden Schleifkontakten aufweist. Die Schleifringe führen also die elektrischen Versorgungs- und Informationsanschlüsse an die Oberfläche des Unterdruck-Anschlußventils und einmal geschlossen um das Unterdruck-Anschlußventil herum, so daß die Anschlußvorrichtung in jeder Winkellage zum Ventilgehäuse befestigt werden kann.

Durch die Erfindung werden folgende Vorteile erreicht:

Die gestellten Aufgaben werden gelöst:

Das Herausragen des Wegaufnehmers aus der Kontur des Verstärkers wird beseitigt. Der erfindungsgemäße Verstärker ist universell einsetzbar.

Eine weitgehende Unabhängigkeit von dem Platzangebot seitens des Autoherstellers für den Verstärker wird durch die Erfindung erreicht. Außerdem wird eine Vereinheitlichung der Verstärkergehäuse auf wenige Standardtypen erzielt. Der Einbauraumbedarf wird generell reduziert.

Der Wegsensor bildet also mit dem Unterdruck-Anschlußventil eine bauliche Einheit. Dementsprechend wird die Kontur des Bremskraftverstärker-Gehäuses nicht mehr durch den Wegsensor beeinflußt. Der Einbau des Wegsensors in das Bremskraftverstärker-Gehäuse hat keinen Einfluß mehr auf den Platzbedarf. Der Bremskraftverstärker ist leichter handhabbar und einbaubar, da weniger Teile nach außen vorstehen. Weiterhin ist der Wegsensor geschützt im Unterdruck-Anschlußventil untergebracht,
so daß die Gefahr einer Beschädigung hervorstehender Teile des Lagesensors weitgehend minimiert ist. Für den Lagesensor muß kein zusätzliches Loch im Bremskraftverstärker-Gehäuse vorgesehen werden. Dies erleichtert die Abdichtung des Bremskraftverstärkers und verringert das Risiko von Undichtigkeiten im Unterdruckraum, das mit jeder zusätzlichen Öffnung steigt und auf die Fahrsicherheit des Fahrzeugs einen erheblichen Einfluß hat. Schließlich ergibt sich noch eine erhebliche Vereinfachung bei der Montage. Der Lagesensor kann im Unterdruck-Anschlußventil vormontiert werden. Das Unterdruck-Anschlußventil kann dann in der Endmontage des Bremskraftverstärkers in das Bremskraftverstärker-Gehäuse eingesetzt werden.

Weitere Einzelheiten der Erfindung, der Aufgabenstellung und der erzielten Vorteile sind der folgenden Beschreibung eines Ausführungsbeispiels der Erfindung zu entnehmen, das anhand von zehn Figuren erläutert wird.

In der Zeichnung zeigt:
- Fig. 1: den pneumatischen Servoteil eines Vakuumbremskraftverstärkers mit einem Wegsensorgehäuse in einer Schnittdarstellung,
- Fig. 2: ein Wegsensorgshäuse mit Vakuumrückschlagventil und Vakuumanschlußstutzen in einer Schnittdarstellung, wobei der Schnitt entsprechend der Schnittlinie II-II der Fig. 4 geführt ist,
- Fig. 3: eine Ansicht des Gegenstands der Fig. 2 in Richtung des Pfeils III der Fig. 2,
- Fig. 4: eine Ansicht mit Teilschnitten des Gegenstands der Fig. 2 in Richtung des Pfeils IV der Fig. 2,
- Fig. 5: eine zu Fig. 1 alternative Anordnung des Wegsensorgehäuses,
- Fig. 6: eine andere Ausführungsform des Wegsensors mit Vakuumrückschlagventil und Vakuumanschlußstutzen in einer Schnittdarstellung,
- Fig. 7: eine Schnittansicht III-III nach Fig. 6,
- Fig. 8: eine weitere Ausführungsform des Wegsensor mit Vakuumrückschlagventil und Vakuumanschlußstutzen in einer Schnittdarstellung,
- Fig. 9: eine Schnittansicht V-V nach Fig. 8 und
- Fig. 10: eine elektrische Anschlußvorrichtung.

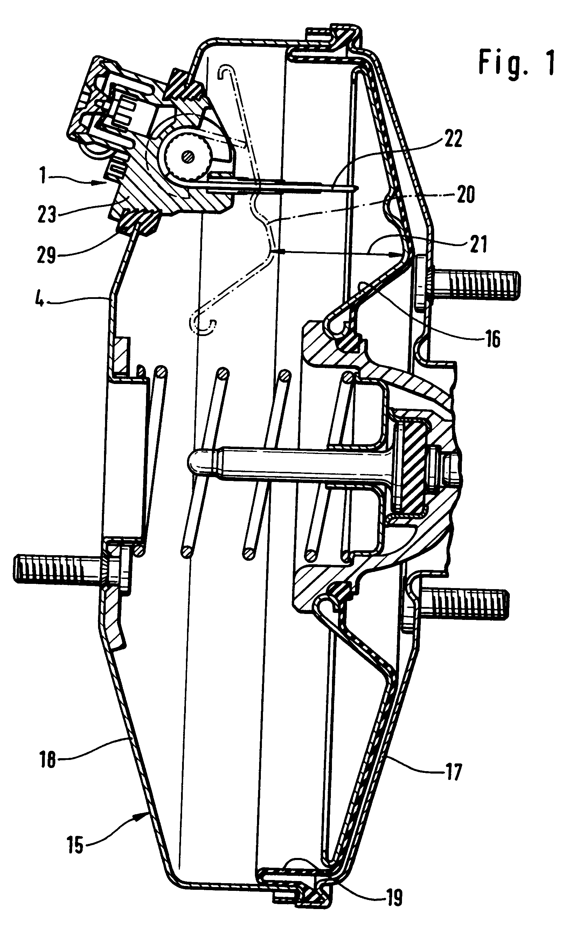

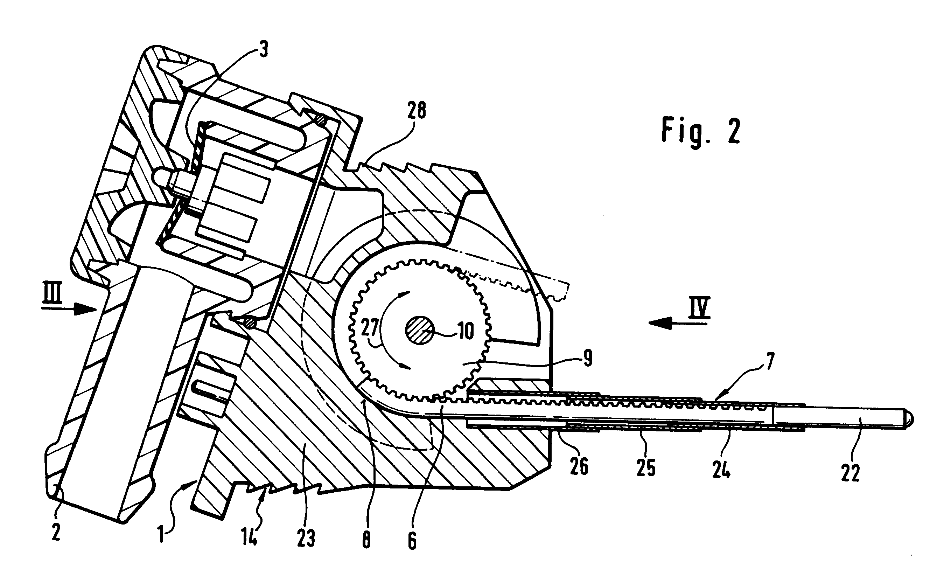

In den Fig. 1 bis 4 wird ein Wegaufnehmer (Wegsensor), der in seiner Gesamtheit mit 1 bezeichnet ist, gezeigt. Er ist mit einem Saugstutzen, beziehungsweise Vakuumanschlußstutzen 2, siehe Fig. 2, und einem Vakuumrückschlagventil 3, siehe Fig. 2, kombiniert. Diese Kombination ist in der Gehäusewand 4, siehe Fig. 1, eines Vakuumservozylinders untergebracht.

Der Wegsensor umfaßt einen Drehpotentiometer 5, siehe Fig. 4, der von einer biegsamen Zahnstange 6, siehe Fig. 2, die durch eine Teleskopeinrichtung 7 geführt wird, betätigt wird.

Die Zahnstange wird außer durch die Teleskopeinrichtung auch durch eine Gleitschiene 8 geführt. Die Zahnstange verdreht ein Zahnrad 9. Das Zahnrad wiederum verdreht über einen Mitnehmerbolzen 11 den Abgreifer 12 des Drehpotentiometers.

Weiterhin ist eine Spiralfeder 13 vorgesehen, die beim Lösen der Bremse alle Betätigungselemente des Wegaufnehmers spielfrei zurückstellt.

Der äußere Einknüpfbund 14 des Wegaufnehmers 1 ist zwecks Verdrehsicherung oval ausgeführt.

Im einzelnen besteht der in Figur 1 gezeigte Vakuumbremskraftverstärker aus dem Servozylinder, der in seiner Gesamtheit mit 15 bezeichnet ist, und einem Servokolben 16.

Der Servozylinder besteht aus zwei Schalen 17, 18, die im Bereich ihrer äußeren Peripherie miteinander verbunden sind. Der Servokolben 16 ist als Membranteller ausgebildet, der mittels einer Rollmembran 19 im Servozylinder abdichtend, axial beweglich befestigt ist.

In Figur 1 sind zwei Positionen des Servokolbens, beziehungsweise des Membrantellers, dargestellt, die die Bezugsziffern 16, 20 tragen. Die Bezugsziffer 16 bezeichnet den Membranteller in seiner zurückgezogenen rechten Stellung bei gelöster Bremse. Die Bezugsziffer 20 bezeichnet die Position des Membrantellers in seiner linken extremen Stellung. Mit dem Doppelpfeil 21 ist der Hub des Membrantellers bezeichnet.

Mit 22 ist ein Taststift bezeichnet, der erst bei der Bremsung am Membranteller anschlägt, oder in einer anderen Ausführungsform ständig anliegt.

Mit 23 ist der als Gehäuse für den Wegsensor ausgebildete Anschlusskörper für den Vakuumanschluss bezeichnet. 29, siehe Figur 1, ist ein Dichtstopfen für den Anschlusskörper 23.

Aus Figur 2 ist ersichtlich, daß der Taststift 22 mit der flexiblen Zahnstange 6 verbunden ist. Die Zahnstange selbst ist in einer Teleskopvorrichtung geführt, die aus drei Teleskoprohren 24, 25, 26 besteht. Die weitere Führung der flexiblen Zahnstange im Gehäuse 23 wird durch die Gleitschiene 8 sichergestellt, die im Gehäuse eingeformt ist.

Wie insbesondere aus Figur 2 und Figur 4 ersichtlich, kämmt die Zahnstange 6 mit dem Zahnrad 9. Die möglichen Bewegungsrichtungen des Zahnrades sind in Figur 2 durch den Doppelpfeil 27 dargestellt.

Aus Figur 2 ist ersichtlich, daß der Einknüpfbund, der in seiner Gesamtheit mit 14 bezeichnet ist, ein Sägezahnprofil 28 aufweist. Der Bund selbst ist, wie dargestellt, oval oder elliptisch ausgeführt, dadurch ist eine Verdrehsicherung des Gehäuses 23 gegenüber der Wand des Servozylinders gewährleistet.

Ein Dichtstopfen 29, der aus elastischem Material besteht, ist zwischen der Gehäusewand 4 und dem Gehäuse 23 angeordnet.

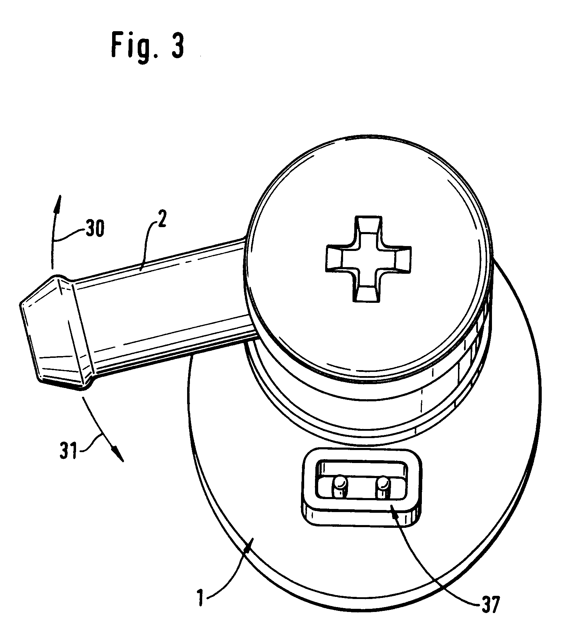

Wie aus Figur 2 hervorgeht, ist am Gehäuse 23 ein Vakuumrückschlagventil 3 befestigt. Am Rückschlagventil ist ein Vakuumanschlußstutzen 2 angeformt. Das Aggregat, bestehend aus Rückschlagventil und Vakuumanschlußstutzen, ist gegenüber dem Gehäuse 23 des Wegsensors drehbar. Die Drehbarkeit wird in Figur 3 durch die Pfeile 30, 31 und in Figur 4 durch die Pfeile 32, 33 dargestellt.

Durch die Verdrehbarkeit des Vakuumanschlußstutzens ist eine leichte Anpassung an die vom Autohersteller vorgegebenen Einbaubedingungen, wie zum Beispiel Verlegung der Vakuumleitung, möglich.

Die flexible Zahnstange 6 ist in Figur 4 geschnitten dargestellt. Sie steht, wie dargelegt, in Wirkverbindung mit dem Zahnrad 9, siehe Figur 4. Bei einer Verdrehung des Zahnrads wird über den Mitnehmerbolzen 11 das Nabenteil 34, das auf der Welle 10 gelagert ist, verdreht. Mit dem Nabenteil ist der Abgreifer 12 fest verbunden.

Der Abgreifer steht in körperlicher Berührung mit dem Ohmschen Widerstand 35, der auf einer mit dem Gehäuse verbundenen Grundplatte 36, die aus elektrisch nicht leitendem Material besteht, angebracht. Je nach der Stellung des Abgreifers auf dem Ohmschen Widerstand wird eine bestimmte Strecke des kreisbogenförmig ausgebildeten Ohmschen Widerstands wirksam.

Dies führt zu verschiedenen Ausgangsspannungen am Steckeranschluss 37, siehe Figur 3. Diese Ausgangsspannungen sind Messgrößen, die Aufschluss geben über die Position des Membrantellers im Servozylinder.

Das Zahnrad 9 hat, wie aus Figur 4 ersichtlich, einen weiteren Mitnehmerbolzen 38, der mit dem einen Ende der Spiralfeder 13, verbunden ist.

Das andere Ende dieser Spiralfeder ist mit dem Gehäuse 23 verbunden. Die Spiralfeder wirkt in dem Sinne, daß über das Zahnrad und die flexible Zahnstange der Taststift, wie oben dargestellt, in Anschlag am Membranteller gehalten wird.

In dem bisher beschriebenen Ausführungsbeispiel ist die aus nichtleitendem Material bestehende Grundplatte und der darauf angebrachte Ohmsche Widerstand stationär im Gehäuse angeordnet, während sich der Abgreifer bewegt.

In einem weiteren Ausführungsbeispiel, das nicht zeichnerisch dargestellt ist, kann vorgesehen werden, daß die Grundplatte mit dem Ohmschen Widerstand durch das Zahnrad bewegt wird und der Abgreifer als stationäres Organ ausgebildet ist.

Das erfindungsgemäße Sensorgehäuse kann in weiteren Ausführungsbeispielen der Erfindung auch ohne Vakuumrückschlagventil und ohne Vakuumanschlußstutzen ausgeführt sein. Eine solche konstruktive Lösung bietet sich besonders dann, wenn das Vakuumrückschlagventil in der Saugleitung im Bereich des Ansaugstutzens des Motors angebracht werden soll. Das Wegsensorgehäuse ist dann so ausgebildet, daß es praktisch in der Kontur des Zylinders des Verstärkers liegt.

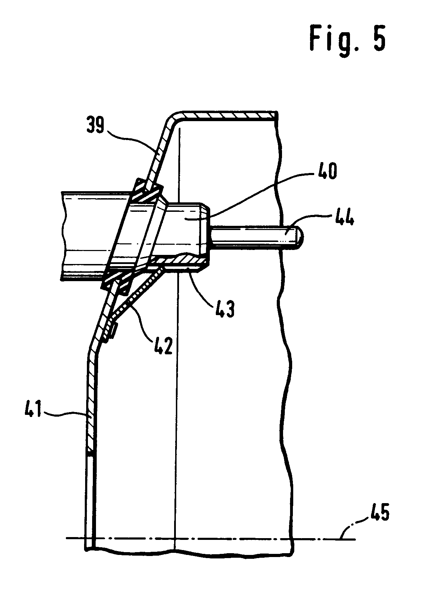

In Figur 5 ist ein weiteres Ausführungsbeispiel der Erfindung dargestellt. Der als Gehäuse ausgebildete Anschlusskörper 40 ist so an einem Teil 39 der Wand 41 des Servozylinders angeordnet, daß der Taststift 44 in Hinsicht auf die Achse 45 des Bremskraftverstärkers achsparallele Bewegungen ausführt.

Die in Fig. 5 dargestellte Zunge 42, die in eine Nut 43 des Anschlußkörpers 40 ragt, ist eine weitere Möglichkeit der Verdrehsicherung bei schrägem Gehäuse und rundem Anschlußkörper.

Achsparallele Bewegungen bei rundem Anschlußkörper 40 lassen sich beispielsweise auch ohne Verdrehsicherung dadurch sicherstellen, indem man den Teil 39 der Wand 41 des Servozylinders so anordnet, daß er senkrecht zur Achse 45 des Bremskraftverstärkers steht.

Der besondere Vorteil dieses nicht gezeigten Ausführungsbeispiels besteht darin, daß beim Verdrehen des mit dem Sensorgehäuse 40 verbundenen Vakuumstutzens der Taststift 44 achsparallel zur Achse des Verstärkers bleibt und nicht in eine Winkelstellung gerät.

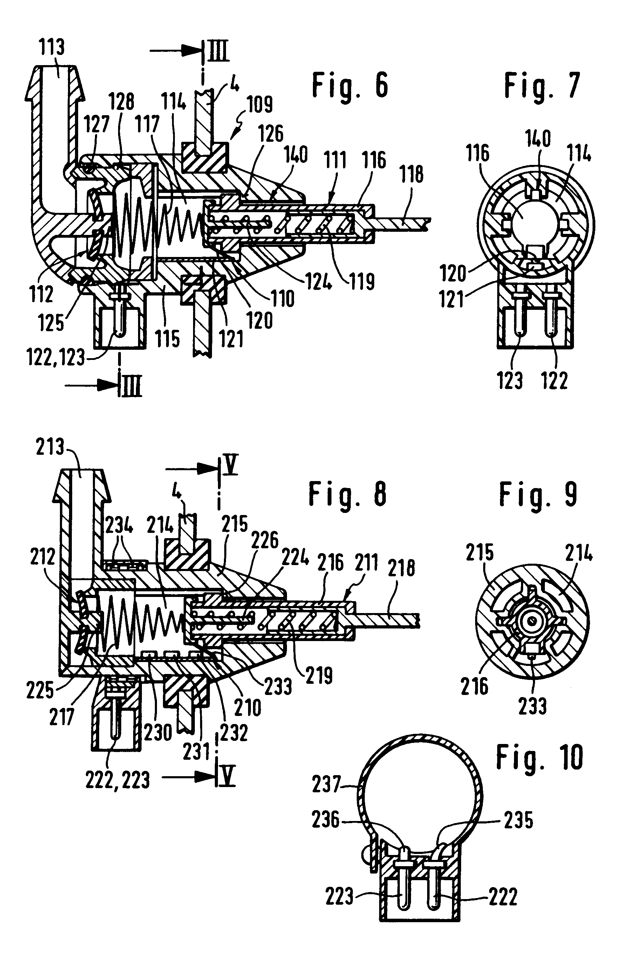

In den Fig. 6 und 7 ist ein weiteres Ausführungsbeispiel eines Unterdruck-Anschlußventils 109 dargestellt. Das Unterdruck-Anschlußventil weist ein Rückschlagventil 112 auf, durch das Luft über einen Ansaugkanal 114 und einen Ansaugstutzen 113 aus dem nicht gezeigten Unterdruckraum des Unterdruckbremskraftverstärkers gesaugt werden kann. Der Ansaugkanal 114 ist in einem Ventilgehäuse 115 angeordnet.

Der im Ventilgehäuse 115 angeordnete Wegsensor 110 weist einen beweglichen Teil 111 auf, der mit dem in Fig. 1 gezeigten Membranteller 16 bei der Betätigung in Berührung steht. In der Ruhelage des Membrantellers 16 kann ein Spiel zwischen dem beweglichen Teil 111 und dem Membranteller 16 vorhanden sein. Bei der Betätigung wird der Membranteller 16 in Richtung auf den nicht gezeigten Hauptbremszylinder bewegt und schiebt dabei den beweglichen Teil 111 in das Ventilgehäuse 115 hinein.

Der bewegliche Teil 111 weist ein erstes Teleskopelement 116 auf, das gegen die Kraft einer Feder 117 in das Gehäuse 115 teleskopartig hinein bewegt werden kann. das erste Teleskopelement 116 wird dabei im Gehäuse von Lagerungen 40 geführt. Das erste Teleskopelement 116 deckt einen Teil des Strömungsquerschnitts des Ansaugkanals 114 ab und ist im Ansaugkanal 114 etwa zentrisch gehalten. Die aus dem Unterdruckraum abgesaugte Luft kann durch den zwischen erstem Teleskopelement 116 und Ventilgehäuse 115 gebildeten Ringspalt zum Ansaugstutzen 113 hin abfließen. Die Feder 117 stützt sich an einem im Gehäuse bzw. an einem damit fest verbundenen Teil gebildeten Anschlag 125 ab. Im ersten Teleskopelement 116 ist ein zweites Teleskopelement 118 angeordnet, das teleskopierend in das erste Teleskopelement 116 hinein bewegt werden kann. Das zweite Teleskopelement 118 wird durch eine zweite Feder 119 in seiner Ruhestellung gehalten. Die zweite Feder 119 wird dabei durch einen Führungsdorn 124 in ihrer Lage geführt. Die zweite Feder 119 ist wesentlich härter als die erste Feder 117, d. h. sie hat eine wesentlich höhere Federkonstante. Wenn nun durch den Membranteller 16 eine Kraft auf das zweite Teleskopelement 118 ausgeübt wird, wird zunächst das erste Teleskopelement 116 gegen die Kraft 117 in das Ventilgehäuse 115 hineingeschoben. Aufgrund der hohen Federkonstanten der zweiten Feder 119 ergibt sich praktisch eine starre Kopplung zwischen dem ersten Teleskopelement 116 und dem zweiten Teleskopelement 118. Erst wenn das erste Teleskopelement 116 nicht mehr weiter in das Ventilgehäuse 115 hinein verschoben werden kann, beispielsweise weil die erste Feder 117 bereits vollständig zusammengedrückt ist, der Druck auf das zweite Teleskopelement 118 durch den Membranteller 16 aber weiter erhöht wird, bewegt sich das zweite Teleskopelement 118 in das erste Teleskopelement 116 hinein.

Am ersten Teleskopelement 116 ist ein Schleifer 120 befestigt. Dieser Schleifer 120 wird bei Bewegung des ersten Teleskopelements 116 über eine Widerstandsbahn 121 geführt. Der Schleifer 120 und mindestens ein Ende der Widerstandsbahn 121 sind elektrisch jeweils mit einem elektrischen Anschluß 122, 123 verbunden. Bei Bewegung des Schleifers 120, die durch eine Bewegung des ersten Teleskopelements 116 verursacht wird, ändert sich damit der elektrische Widerstand zwischen den elektrischen Anschlüssen 122 und 123. Der Stromfluß durch die elektrischen Anschlüsse 122, 123 bzw. die Spannung dazwischen ist dann ein Maß dafür, an welcher Stelle sich der Schleifer 120 auf der Widerstandsbahn 121 befindet. Dies erlaubt gleichzeitig eine Aussage darüber, wie weit das erste Teleskopelement 116 in das Ventilgehäuse 115 hineingeschoben worden ist, was wiederum Rückschläge auf die Stellung des Membrantellers 16 und des nicht gezeigten Bremspedals erlaubt. Über den Bewegungsbereich des ersten Teleskopelements 116 ist die Lage des Schleifers 120 auf der Widerstandsbahn 121 nämlich ein direktes Maß für die Lage des Membrantellers 16 im Gehäuse des Bremskraftverstärkers. Die Bewegung des ersten Teleskopelements 116 nach rechts wird durch einen im Ventilgehäuse 115 ausgebildeten Anschlag 126 begrenzt.

Der Ansaugstutzen 113 ist in das Ventilgehäuse 115 eingerastet, beispielsweise durch eine Schnappverbindung 128. Zwischen dem Ansaugstutzen 113 und dem Ventilgehäuse 115 ist eine Dichtung 127 angeordnet, die verhindert, daß der im Ansaugstutzen 113 erzeugte Unterdruck durch das Nach strömen von Luft von außen wieder aufgehoben bzw. abgeschwächt wird. Der Ansaugstutzen 113 ist unter einem Winkel in bezug auf den Ansaugkanal 114 angeordnet. Im dargestellten Ausführungsbeispiel beträgt dieser Winkel ca.90°.

Damit wird erreicht, daß der Ansaugstutzen 113 annähernd parallel zur Frontseite des Verstärkergehäuses 4 ausgerichtet werden kann. Ein nicht dargestellter Ansaugschlauch, der den Unterdruck aus dem Motor-Ansaugkanal zum Bremskraftverstärker führt, kann dann von oben oder von der Seite auf den Ansaugstutzen 113 aufgeschoben werden. Um eine bevorzugte Montagestellung für den Ansaugstutzen 113 zu erreichen, ist der Ansaugstutzen 113 drehbar im Ventilgehäuse 115 angeordnet. Unabhängig von der Drehlage des Ventilgehäuses 15 im Verstärkergehäuse 4 läßt sich der Ansaugstutzen 113 also immer so einstellen, daß er beispielsweise nach oben weist. Damit läßt sich erreichen, daß die elektrischen Anschlüsse 22, 23 und der Ansaugstutzen 113 praktisch in jeder Winkellage zueinander montiert werden können.

Die Fig. 8 bis 10 zeigen eine weitere Ausführungsform eines Unterdruck-Anschlußventils, bei dem Teile, die denen der Fig. 6 und 7 entsprechen, mit um 100 erhöhten Bezugszeichen versehen sind.

Im Unterschied zu dem Ausführungsbeispiel der Fig. 6 und 7 ist der Ansaugstutzen 213 nicht drehbar, sondern fest am Ventilgehäuse 215 angeordnet. Um trotzdem zu erreichen, daß die Winkellage zwischen Ansaugstutzen 213 und den elektrischen Anschlüssen 222, 223 beliebig einstellbar ist, sind die elektrischen Anschlüsse 222, 223 auf dem Ventilgehäuse 215 verdrehbar. Zu diesem Zweck sind auf der Oberfläche des Ventilgehäuses 215 zwei Schleifbahnen 234 vorgesehen, die sich in Umfangsrichtung um das gesamte Ventilgehäuse 215 herum erstrecken, wobei ihre Anfänge und ihre Enden miteinander verbunden sind. Ein elektrisches Anschlußstück 237 weist Schleifkontakte 235, 236 auf, die mit den elektrischen Anschlüssen 222, 223 verbunden sind. Die Schleifkontakte 235, 236 schleifen in jeder Winkellage des Anschlußstücks 237 auf den beiden Schleifbahnen und stellen deswegen in jeder Winkellage die elektrische Verbindung zwischen den Schleifbahnen 234 und den elektrischen Anschlüssen 222, 223 sicher.

Anstelle der Schleifbahn 21 des ersten Ausführungsbeispiels sind drei voneinander getrennte Kontaktflächen 230, 231, 232 vorgesehen. Die Abstände zwischen den einzelnen Kontaktflächen 230, 231, 232 sind in Fig. 8 übertrieben groß dargestellt. In Wirklichkeit schließen die Kontaktflächen praktisch unmittelbar aneinander an, wobei sie aber elektrisch voneinander isoliert sind. Am ersten Teleskopelement 216 ist ein beweglicher Konntakt 233 vorgesehen, der mit dem ersten Teleskopelement 216 fest verbunden ist. Bei Bewegung des beweglichen Teils 211 kommt der bewegliche Kontakt nacheinander in Berührung mit den Kontaktflächen 232, 231 und 230. Der Kontakt zwischen dem beweglichen Kontakt und den Kontaktflächen läßt sich auf elektrischem Wege ermitteln. Steht der bewegliche Kontakt 233 beispielsweise mit der Kontaktfläche 231 in Verbindung, ermöglicht dies eine Aussage darüber, wie weit der bewegliche Teil 211 in das Gehäuse 15 hineingeschoben worden ist, und somit eine Aussage über die erfolgte Bewegung des Membrantellers 16 bzw. des Bremspedals. Die über die Kontaktflächen 230, 231, 232 fließenden Ströme bzw. die an Widerständen, die mit den Kontaktflächen in Verbindung stehen, abfallenden Spannungen ergeben eine Information darüber, welche Kontaktfläche gerade mit dem beweglichen Kontakt 233 in Verbindung steht. Da hier diskrete Werte ermittelt werden, lassen sich diese Werte auch leicht digital weiterverarbeiten.

### Liste der Einzelteile

- 1: Wegaufnehmer, Wegsensor
- 2: Vakuumanschlußstutzen
- 3: Vakuumrückschlagventil
- 4: Gehäusewand
- 5: Drehpotentiometer
- 6: Zahnstange
- 7: Teleskopeinrichtung
- 8: Gleitschiene
- 9: Zahnrad
- 10: Welle
- 11: Mitnehmerbolzen
- 12: Abgreifer, Abgreiforgan
- 13: Spiralfeder
- 14: Einknüpfbund
- 15: Servozylinder
- 16: Servokolben, Membranteller
- 17: Schale
- 18: Schale
- 19: Rollmembran
- 20: Membranteller-Position
- 21: Doppelpfeil, maximal möglicher Hub
- 22: Taststift
- 23: Anschlußkörper, Gehäuse
- 24: Teleskoprohr
- 25: Teleskoprohr
- 26: Teleskoprohr
- 27: Doppelpfeil
- 28: Sägezahnprofil
- 29: Dichtstopfen
- 30: Pfeil
- 31: Pfeil
- 32: Pfeil
- 33: Pfeil
- 34: Nabenteil
- 35: Ohmscher Widerstand
- 36: Grundplatte
- 37: Steckeranschluss
- 38: Mitnehmerbolzen
- 39: Fläche, Teil
- 40: Sensorgehäuse, Anschlußkörper
- 41: Wand
- 42: Zunge
- 43: Nut
- 44: Taststift
- 45: Achse
- 109: Unterdruck-Anschlußventil
- 110: Wegsensor
- 111: Teil
- 112: Rückschlagventil
- 113: Ansaugstutzen
- 114: Ansaugkanal
- 115: Ventilgehäuse
- 116: Teleskopelement
- 117: Feder
- 118: Teleskopelement
- 119: Feder
- 120: Schleifer
- 121: Widerstandsbahn
- 122: Anschluß
- 123: Anschluß
- 124: Führungsdorn
- 125: Anschlag
- 126: Anschlag
- 127: Dichtung
- 128: Schnappverbindung
- 210: Wegsensor
- 211: Teil
- 212: Rückschlagventil
- 213: Ansaugstutzen
- 214: Ansaugkanal
- 215: Ventilgehäuse
- 216: Teleskopelement
- 217: Feder
- 218: Teleskopelement
- 219: Feder
- 222: Anschluß
- 223: Anschluß
- 224: Führungsdorn
- 225: Anschlag
- 230: Kontaktfläche
- 231: Kontaktfläche
- 232: Kontaktfläche
- 233: Kontakt
- 234: Schleifbahn
- 235: Schleifkontakt
- 236: Schleifkontakt
- 237: Anschlußstück

## Patentansprüche

1. Vakuumbremskraftverstärker für Bremssysteme mit Antiblockier- und/oder Antriebsschlupfregelung, der einen Servozylinder (15) und einen Servokolben (16) innerhalb des Servozylinders umfaßt, wobei in der Wand (4) des Servozylinders ein Anschlußkörper (23) für ein fluidisches Servomedium angeordnet ist und die Stellung des Servokolbens (16) im Servozylinder durch eine Sensiervorrichtung festgestellt wird, dadurch **gekennzeichnet**, daß die Sensiervorrichtung zumindest teilweise im Anschlußkörper (23) untergebracht ist, so, daß der Anschlußkörper (23) als Gehäuse für mindestens einen Teil der Sensiervorrichtung ausgebildet ist.

2. Vakuumbremskraftverstärker nach Anspruch 1 dadurch **gekennzeichnet**, daß die Sensiervorrichtung aus einem Tastorgan, das ein Getriebe betätigt, aus einem elektrischen Teil zur Erzeugung eines Sensorsignals (elektrischer Teil), das vom Getriebe betätigt wird, besteht, daß zumindest ein Teil der Führung für das Tastorgan, das Getriebe, und der elektrische Teil im Anschlusskörper (23) untergebracht sind.

3. Vakuumbremskraftverstärker nach einem oder mehreren der vorangegangenen Ansprüche, dadurch **gekennzeichnet**, daß das Getriebe eine flexible Zahnstange (6) und ein Zahnrad (9), die in Wirkverbindung miteinander stehen, umfasst.

4. Vakuumbremskraftverstärker nach einem oder mehreren der vorangegangenen Ansprüche, dadurch **gekennzeichnet**, daß das Tastorgan einen Taststift (22), der mit der flexiblen Zahnstange (6) verbunden ist, und eine Teleskopvorrichtung (7) zur Führung des Taststifts umfasst.

5. Vakuumbremskraftverstärker nach einem oder mehreren der vorangegangenen Ansprüche, dadurch **gekennzeichnet**, daß ein Federorgan (Spiralfeder (13)) vorgesehen ist, die über das Getriebe den Taststift (22) in Anschlag am Servokolben (16, 20) hält.

6. Vakuumbremskraftverstärker nach einem oder mehreren der vorangegangenen Ansprüche, dadurch **gekennzeichnet**, daß der elektrische Teil aus einem Drehpotentiometer (5) besteht, der durch das Zahnrad (9) betätigt wird.

7. Vakuumbremskraftverstärker nach einem oder mehreren der vorangegangenen Ansprüche, dadurch **gekennzeichnet**, daß eine Grundplatte für den Drehpotentiometer vorgesehen ist, die zusammen mit dem Zahnrad ein Bauteil bildet.

8. Vakuumbremskraftverstärker nach einem oder mehreren der vorangegangenen Ansprüche, dadurch **gekennzeichnet**, daß der Drehpotentiometer eine aus elektrisch nichtleitendem Material bestehende Grundplatte (36), auf der ein kreisbogenförmig (nicht geschlossener Kreis) ausgebildeter Ohmscher Widerstand (35) angeordnet ist und ein mit dem Ohmschen Widerstand in körperlicher Berührung stehendes Abgreiforgan (12), das eine kreisbogenförmige Bewegung relativ zum Ohmschen Widerstand ausführen kann, umfasst.

9. Vakuumbremskraftverstärker nach einem oder mehreren der vorangegangenen Ansprüche, dadurch **gekennzeichnet**, daß das Abgreiforgan (12) durch das Zahnrad (9) relativ zur Grundplatte (36) mit dem Ohmschen Widerstand (35) verdrehbar angeordnet ist.

10. Vakuumbremskraftverstärker nach einem oder mehreren der vorangegangenen Ansprüche, dadurch **gekennzeichnet**, daß die Grundplatte mit dem Ohmschen Widerstand durch das Zahnrad relativ zum Abgreiforgan verdrehbar angeordnet ist.

11. Vakuumbremskraftverstärker nach einem oder mehreren der vorangegangenen Ansprüche, dadurch **gekennzeichnet**, daß der Ohmsche Widerstand auf dem Zahnrad angeordnet ist.

12. Vakuumbremskraftverstärker nach einem oder mehreren der vorangegangenen Ansprüche, dadurch **gekennzeichnet**, daß der aus Kunststoff hergestellte Anschlusskörper (23) als Gehäuse ausgebildet ist, in dem eine gemeinsame Welle (10) für das Zahnrad (9) und das Drehpotentiometer (5) angeordnet ist.

13. Vakuumbremskraftverstärker nach einem oder mehreren der vorangegangenen Ansprüche, dadurch **gekennzeichnet**, daß der Anschlusskörper (23) als Gehäuse ausgebildet ist, in dem eine Gleitschiene (8) für die Zahnstange (6) untergebracht ist.

14. Vakuumbremskraftverstärker nach einem oder mehreren der vorangegangenen Ansprüche, dadurch **gekennzeichnet**, daß der Anschlusskörper (23) als Aufnahmeelement für ein Vakuumrückschlagventil (3) ausgebildet ist.

15. Vakuumbremskraftverstärker nach einem oder mehreren der vorangegangenen Ansprüche, dadurch **gekennzeichnet**, daß der Anschlusskörper (23) als Aufnahmeelement für einen Vakuumanschlußstutzen (2) ausgebildet ist.

16. Vakuumbremskraftverstärker nach einem oder mehreren der vorangegangenen Ansprüche, dadurch **gekennzeichnet**, daß der Vakuumanschlußstutzen (2) im Anschlusskörper (23) drehbar angeordnet ist.

17. Vakuumbremskraftverstärker nach einem oder mehreren der vorangegangenen Ansprüche, dadurch **gekennzeichnet**, daß der Anschlusskörper (23) im Bereich seiner Verbindung mit dem Servozylinder (15) nichtkreisförmig ausgebildet ist.

18. Vakuumbremskraftverstärker nach einem oder mehreren der vorangegangenen Ansprüche, dadurch **gekennzeichnet**, daß der als Gehäuse ausgebildete Anschlusskörper (40) so an einem Teil (39) der Wand (41) des Servozylinders angeordnet ist, daß der Taststift (44) in Hinsicht auf die Achse (45) des Bremskraftverstärkers achsparallele Bewegungen ausführt.

19. Vakuumbremskraftverstärker nach einem oder mehreren der vorangegangenen Ansprüche, dadurch **gekennzeichnet**, daß der Anschlußkörper (23) an seinem äußeren Umfang und im Bereich der Verbindung mit der Öffnung in der Wand des Servozylinders mit einem vorzugsweise sägezahnförmigen Außenprofil (28) aufweisenden Einknüpfbund (14) versehen ist, daß ein elastischer Dichtstopfen (29) zwischen der Öffnung in der Wand (4) des Servozylinders und dem Einknüpfbund (14) angeordnet ist.

20. Vakuumbremskraftverstärker nach einem oder mehreren der vorangegangenen Ansprüche, dadurch **gekennzeichnet**, daß das Zahnrad und die drehbare Grundplatte des Drehpotentiometers einteilig ausgeführt sind.

21. Vakuumbremskraftverstärker nach Anspruch 1, dadurch **gekennzeichnet,** daß der Anschlußkörper (23) als Unterdruck-Anschlußventil (109,209) ausgebildet ist und einen in einen Unterdruckraum mündenden, in einem Ventilgehäuse (115,215) angeordneten Ansaugkanal (114,214) aufweist, in den ein beweglicher Teil (111,211) des Wegsensors (110,210) eingeführt ist und einen Teil des Ansaugquerschnitts abdeckt.

22. Vakuumbremskraftverstärker nach Anspruch 21, dadurch **gekennzeichnet**, daß der bewegliche Teil (111,211) zentrisch im Ansaugkanal (114,214) angeordnet ist.

23. Vakuumbremskraftverstärker nach Anspruch 21 oder 22, dadurch **gekennzeichnet**, daß im Unterdruck-Anschlußventil (109,209) ein Aufnehmer (110,210) angeordnet ist, der in Abhängigkeit von der Stellung des beweglichen Teils (111,211) ein elektrisches Ausgangssignal erzeugt.

24. Vakuumbremskraftverstärker nach Anspruch 23, dadurch **gekennzeichnet**, daß der elektrische Aufnehmer als Widerstandsbahn (121) ausgebildet ist, auf der ein von dem beweglichen Teil (111,211) angetriebener Schleifer (120) schleift.

25. Vakuumbremskraftverstärker nach Anspruch 23, dadurch **gekennzeichnet**, daß der elektrische Aufnehmer mehrere elektrisch voneinander getrennte Kontaktflächen (230,231,232) aufweist, die bei einer Bewegung des beweglichen Teils (211) nacheinander mit einem vom beweglichen Teil (211) angetriebenen beweglichen Kontakt (233) in Berührung kommen.

26. Vakuumbremskraftverstärker nach Anspruch 21 bis 25, dadurch **gekennzeichnet**, daß der bewegliche Teil durch eine erste Feder (117,217) in Richtung auf seine Ruhelage vorgespannt ist, daß im beweglichen Teil (111,211) ein Teleskopelement (118,218) angeordnet ist, das von einer in die gleiche Richtung wirkenden zweiten Feder (119,219) in seine Ruhelage vorgespannt ist, und daß die zweite Feder (119,219) wesentlich härter als die erste Feder (117,217) ist.

27. Vakuumbremskraftverstärker nach Anspruch 21 bis 26, dadurch **gekennzeichnet**, daß das Unterdruck-Anschlußventil (109) einen Ansaugstutzen (113,213) aufweist, der unter einem vorbestimmten Winkel zum Ansaugkanal (114,214) verläuft, wobei der Ansaugstutzen (113,213) gegenüber dem Ventilgehäuse (115,215) verdrehbar ist.

28. Vakuumbremskraftverstärker nach Anspruch 21 bis 27, dadurch **gekennzeichnet**, daß eine elektrische Anschlußvorrichtung (237) vorgesehen ist, die am Ventilgehäuse (215) befestigt und in ihre Befestigungslage gegenüber dem Ventilgehäuse (215) verdrehbar ist.

29. Vakuumbremskraftverstärker nach Anspruch 28, dadurch **gekennzeichnet**, daß das Ventilgehäuse (215) mehrere Schleifringe (234) aufweist, die mit dem Aufnehmer (210) elektrisch verbunden sind, und die Anschlußvorrichtung (237) eine entsprechende Anzahl von darauf anliegenden Schleifkontakten (235,236) aufweist.

## Claims

1. A vacuum brake power booster for brake systems with anti-lock and/or traction slip control, which comprises a servo-cylinder (15) and a servo-piston (16) within the servo-cylinder, the wall (4) of the servo-cylinder containing a connecting member (23) for a fluidic servo medium, and the position of the servo-piston (16) in the servo-cylinder being detected by a sensing device,
**characterized** in that at least part of the sensing device is accommodated within the connecting member (23) in such a fashion that the connecting member (23) is designed as a housing for at least part of the sensing device.

2. A vacuum brake power booster as claimed in claim 1,
**characterized** in that the sensing device is composed of a scanning member which actuates a gearing, an electric element to generate a sensor signal (electric part), which is actuated by the gearing, in that at least part of the guide for the scanning member, the gearing, and the electric element are accommodated in the connecting member (23).

3. A vacuum brake power booster as claimed in anyone or in several of the preceding claims,
**characterized** in that the gearing comprises a flexible toothed rack (6) and a gear (9) which are in interacting connection with each other.

4. A vacuum brake power booster as claimed in anyone or in several of the preceding claims,
**characterized** in that the scanning member is comprised of a scanning pin (22) which is connected to the flexible toothed rack (6), and of a telescopic device (7) to guide the scanning pin.

5. A vacuum brake power booster as claimed in anyone or in several of the preceding claims,
**characterized** in that a spring member (helical spring (13)) is provided which keeps the scanning pin (22) in abutment with the servo-piston (16, 20) through the gearing.

6. A vacuum brake power booster as claimed in anyone or in several of the preceding claims,
**characterized** in that the electric part consists of a rotary potentiometer (5) which is actuated by the gear (9).

7. A vacuum brake power booster as claimed in anyone or in several of the preceding claims,
**characterized** in that a baseplate for the rotary potentiometer is provided which forms one component together with the gear.

8. A vacuum brake power booster as claimed in anyone or in several of the preceding claims,
**characterized** in that the rotary potentiometer is comprised of a baseplate (36) which is fabricated of an electrically non-conductive material on which an ohmic resistance (35) of circular arc-shaped configuration (not closed circuit) is accommodated, and of a tapping member (12) which is in physical contact with the ohmic resistance and which is adapted to perform a circular arc-shaped movement relative to the ohmic resistance.

9. A vacuum brake power booster as claimed in anyone or in several of the preceding claims,
**characterized** in that the tapping member (12) is arranged so as to be rotatable by the gear (9) relative to the baseplate (36) with the ohmic resistance (35).

10. A vacuum brake power booster as claimed in anyone or in several of the preceding claims,
**characterized** in that the baseplate with the ohmic resistance is arranged so as to be rotatable by the gear relative to the tapping member.

11. A vacuum brake power booster as claimed in anyone or in several of the preceding claims,
**characterized** in that the ohmic resistance is positioned on the gear.

12. A vacuum brake power booster as claimed in anyone or in several of the preceding claims,
**characterized** in that the connecting member (23) which is made of plastic material is designed in the shape of a housing within which a common shaft (10) for the gear (9) and the rotary potentiometer (5) is accommodated.

13. A vacuum brake power booster as claimed in anyone or in several of the preceding claims,
**characterized** in that the connecting member (23) is designed in the shape of a housing within which a slide rail (8) for the toothed rack (6) is accommodated.

14. A vacuum brake power booster as claimed in anyone or in several of the preceding claims,
**characterized** in that the connecting member (23) is designed in the shape of an accommodating element for a vacuum non-return valve (3)

15. A vacuum brake power booster as claimed in anyone or in several of the preceding claims,
**characterized** in that the connecting member (23) is designed in the shape of an accommodating element for a vacuum connecting nozzle (2).

16. A vacuum brake power booster as claimed in anyone or in several of the preceding claims,
**characterized** in that the vacuum connecting nozzle (2) is accommodated in the connecting member (23) so as to be rotatable.

17. A vacuum brake power booster as claimed in anyone or in several of the preceding claims,
**characterized** in that in the range of its coupling to the servo-cylinder (15) the connecting member (23) presents a non-circular configuration.

18. A vacuum brake power booster as claimed in anyone or in several of the preceding claims,
**characterized** in that the connecting member (40) being designed in the shape of a housing is positioned at a portion (39) of the wall (41) of the servo-cylinder in such a manner that the scanning pin (44) performs paraxial movements in respect of the axis (45) of the brake power booster.

19. A vacuum brake power booster as claimed in anyone or in several of the preceding claims,
**characterized** in that at its outer circumference and in the range of its connection with the opening in the wall of the servo-cylinder the connecting member (23) is furnished with a buttoning-in collar (14) preferably presenting a saw tooth-shaped external profile (28), in that an elastic sealing plug (29) is positioned between the opening in the wall (4) of the servo-cylinder and the buttoning-in collar (14).

20. A vacuum brake power booster as claimed in anyone or in several of the preceding claims,
**characterized** in that the gear and the rotatable baseplate of the rotary potentiometer are of one-part design.

21. A vacuum brake power booster as claimed in claim 1,
**characterized** in that the connecting member (23) is designed as a vacuum connecting valve (109, 209) and is provided with a suction duct (114, 214) which ends up in a vacuum chamber, is positioned in a valve housing (115, 215), and into which a movable element (111, 211) of the travel sensor (110, 210) is introduced covering part of the cross sectional area of suction.

22. A vacuum brake power booster as claimed in claim 21,
**characterized** in that the movable element (111, 211) is positioned centrically within the suction duct (114, 214).

23. A vacuum brake power booster as claimed in claim 21 or claim 22,
**characterized** in that a sensor (110, 210) is positioned in the vacuum connecting valve (109, 209) which generates an electric output signal depending on the position of the movable element (111, 211).

24. A vacuum brake power booster as claimed in claim 23,
**characterized** in that the electric sensor is designed in the shape of a resistance track (121) on which a slider (120) slides which is driven by the movable element (111, 211).

25. A vacuum brake power booster as claimed in claim 23,
**characterized** in that the electric sensor is provided with a plurality of contact surfaces (230, 231, 232) which are separated from one another electrically and which, in the event of a movement of the movable element (211), come in touch one after the other with a movable contact (233) being driven by the movable element (211).

26. A vacuum brake power booster as claimed in anyone of claims 21 to 25,
**characterized** in that that the movable element is prestressed by a first spring (117, 217) in the direction of its position of rest, in that in the movable element (111, 211) a telescopic element (118, 218) is positioned which is prestressed in the direction of its position of rest by a second spring (119, 219) acting in the same direction, and in that the second spring (119, 219) is much more rigid than the first spring (117, 217).

27. A vacuum brake power booster as claimed in anyone of claims 21 to 26,
**characterized** in that the vacuum connecting valve (109) is provided with a suction nozzle (113, 213) which extends at a predetermined angle in respect of the suction duct (114, 214), said suction nozzle (113, 213) being rotatable relative to the said valve housing (115, 215).

28. A vacuum brake power booster as claimed in anyone of claims 21 to 27,
**characterized** in that an electric connecting device (237) is provided which is fixed to the valve housing (215) and which is rotatable in its fixing position in respect of the valve housing (215).

29. A vacuum brake power booster as claimed in claim 28,
**characterized** in that the valve housing (215) is furnished with a plurality of sliding contact rings (234) which are electrically connected to the sensor (210), and in that the connecting device (237) is provided with a corresponding number of sliding contacts (235, 236) which are abutted on the sliding contact rings (234).

## Revendications

1. Amplificateur d'effort de freinage à dépression, pour système de freinage à régulation antiblocage et/ou régulation du glissement de traction, qui comprend un cylindre d'assistance (15) et un piston d'assistance (16) disposé à l'intérieur du cylindre d'assistance, un corps de raccordement (23) pour agent fluide d'assistance étant disposé dans la paroi (4) du cylindre d'assistance et la position du piston d'assistance (16) dans le cylindre d'assistance étant relevée par un dispositif de détection, caractérisé en ce que le dispositif de détection est monté au moins partiellement dans le corps de raccordement (23), de sorte que le corps de raccordement (23) est réalisé sous la forme d'un boîtier servant à au moins une partie du dispositif de détection.

2. Amplificateur d'effort de freinage à dépression suivant la revendication 1, caractérisé en ce que le dispositif de détection est constitué d'un organe de palpage, qui actionne un mécanisme à engrenage, et d'une partie électrique servant à produire un signal de détecteur (partie électrique), qui est actionnée par le mécanisme à engrenage, et en ce qu'au moins une partie des moyens de guidage de l'organe de palpage, du mécanisme à engrenage et de la partie électrique est montée dans le corps de raccordement (23).

3. Amplificateur d'effort de freinage à dépression suivant une ou plusieurs des revendications précédentes, caractérisé en ce que le mécanisme à engrenage comprend une crémaillère flexible (6) et une roue dentée (9) qui sont reliées de façon à coopérer entre elles.

4. Amplificateur d'effort de freinage à dépression suivant une ou plusieurs des revendications précédentes, caractérisé en ce que l'organe de palpage comprend une tige de palpage (22), qui est reliée à la crémaillère flexible (6), et un dispositif télescopique (7) servant à guider la tige de palpage.

5. Amplificateur d'effort de freinage à dépression suivant une ou plusieurs des revendications précédentes, caractérisé en ce qu'il est prévu un organe élastique (ressort spiral (13)), qui, par l'intermédiaire du mécanisme à engrenage, maintient le doigt de palpage (22) en butée sur le piston d'assistance (16, 20).

6. Amplificateur d'effort de freinage à dépression suivant une ou plusieurs des revendications précédentes, caractérisé en ce que la partie électrique est constituée d'un potentiométre rotatif (5) qui est actionné par la roue dentée (9).

7. Amplificateur d'effort de freinage à dépression suivant une ou plusieurs des revendications précédentes, caractérisé en ce qu'il est prévu, pour le potentiomètre rotatif, une plaque de base qui constitue un seul bloc avec la roue dentée.

8. Amplificateur d'effort de freinage à dépression suivant une ou plusieurs des revendications précédentes, caractérisé en ce que le potentiomètre rotatif comprend une plaque de base (36), en un matériau électriquement non conducteur, sur laquelle est disposée une résistance ohmique (35), en forme d'arc de cercle (cercle non fermé), et un curseur (12) qui est en contact physique avec la résistance ohmique et qui peut exécuter un déplacement en arc de cercle vis-à-vis de la résistance ohmique.

9. Amplificateur d'effort de freinage à dépression suivant une ou plusieurs des revendications précédentes, caractérisé en ce que le curseur (12) est disposé de façon à pouvoir être entraîné en rotation vis-à-vis de la plaque de base (36), avec la résistance ohmique (35) et au moyen de la roue dentée (9).

10. Amplificateur d'effort de freinage à dépression suivant une ou plusieurs des revendications précédentes, caractérisé en ce que la plaque de base est disposée, avec la résistance ohmique, de façon à pouvoir être entraînée en rotation vis-à-vis de l'organe de prélèvement au moyen de la roue dentée.

11. Amplificateur d'effort de freinage à dépression suivant une ou plusieurs des revendications précédentes, caractérisé en ce que la résistance ohmique est disposée sur la roue dentée.

12. Amplificateur d'effort de freinage à dépression suivant une ou plusieurs des revendications précédentes, caractérisé en ce que le corps de raccordement (23), réalisé en matière plastique, est agencé sous la forme d'un boîtier dans lequel est disposé un arbre (10) commun à la roue dentée (9) et au potentiomètre rotatif (5).

13. Amplificateur d'effort de freinage à dépression suivant une ou plusieurs des revendications précédentes, caractérisé en ce que le corps de raccordement (23) est réalisé sous la forme d'un boîtier dans lequel un rail (8) de glissement de la crémaillère (6) est monté.

14. Amplificateur d'effort de freinage à dépression suivant une ou plusieurs des revendications précédentes, caractérisé en ce que le corps de raccordement (23) est réalisé sous la forme d'un élément de logement d'une valve antiretour de dépression (3).

15. Amplificateur d'effort de freinage à dépression suivant une ou plusieurs des revendications précédentes, caractérisé en ce que le corps de raccordement (23) est réalisé sous la forme d'un élément de logement d'une tubulure de raccordement de dépression (2).

16. Amplificateur d'effort de freinage à dépression suivant une ou plusieurs des revendications précédentes, caractérisé en ce que la tubulure de raccordement de dépression (2) est disposée d'une manière rotative dans le corps de raccordement (23).

17. Amplificateur d'effort de freinage à dépression suivant une ou plusieurs des revendications précédentes, caractérisé en ce que le corps de raccordement (23) n'est pas réalisé avec une forme circulaire dans la zone de sa liaison avec le cylindre d'assistance (15).

18. Amplificateur d'effort de freinage à dépression suivant une ou plusieurs des revendications précédentes, caractérisé en ce que le corps de raccordement (40), réalisé en forme de boîtier, est disposé sur une partie (39) de la paroi (41) du cylindre d'assistance de façon telle que le doigt de palpage (44) effectue des déplacements parallèles à l'axe (45) de l'amplificateur d'effort de freinage.

19. Amplificateur d'effort de freinage à dépression suivant une ou plusieurs des revendications précédentes, caractérisé en ce que, sur son contour extérieur et dans la zone de la liaison avec l'ouverture ménagée dans la paroi du cylindre d'assistance, le corps de raccordement (23) est pourvu d'une collerette d'accrochage (14) ayant un contour extérieur (28) de préférence en forme de dents de scie et en ce qu'un bouchon élastique d'étanchéité (29) est disposé entre l'ouverture ménagée dans la paroi (4) du cylindre d'assistance et la collerette d'accrochage (14).

20. Amplificateur d'effort de freinage à dépression suivant une ou plusieurs des revendications précédentes, caractérisé en ce que la roue dentée et la plaque de base, rotative, du potentiomètre rotatif sont réalisées d'une seule pièce.

21. Amplificateur d'effort de freinage à dépression suivant la revendication 1, caractérisé en ce que le corps de raccordement (23) est réalisé sous la forme d'une valve de raccordement de dépression (109, 209) et comporte un conduit d'aspiration (114, 214) qui est ménagé dans un boîtier de valve (115, 215) et débouche dans une chambre de dépression et dans lequel une partie mobile (111, 211) du capteur de déplacement (110, 210) est introduite et couvre une partie de la section transversale d'aspiration.

22. Amplificateur d'effort de freinage à dépression suivant la revendication 21, caractérisé en ce que la partie mobile (111, 211) est disposée d'une manière centrale dans le conduit d'aspiration (114, 214).

23. Amplificateur d'effort de freinage à dépression suivant la revendication 21 ou 22, caractérisé en ce qu'il est disposé, dans la valve de raccordement de dépression (109, 209), un capteur (110, 210) qui émet un signal électrique de sortie en fonction de la position de la pièce mobile (111, 211).

24. Amplificateur d'effort de freinage à dépression suivant la revendication 23, caractérisé en ce que le capteur électrique est réalisé sous la forme d'une piste de résistance (121) sur laquelle frotte un frotteur (120) entraîné par la partie mobile (111, 211).

25. Amplificateur d'effort de freinage à dépression suivant la revendication 23, caractérisé en ce que le capteur électrique comprend plusieurs surfaces de contact (230, 231, 232) qui sont isolées électriquement l'une de l'autre et qui, lors d'un déplacement de la partie mobile (211), viennent successivement en contact avec un contact mobile (233) entraîné par cette partie mobile.

26. Amplificateur d'effort de freinage à dépression suivant l'une des revendications 21 à 25, caractérisé en ce que la partie mobile est soumise par un premier ressort (117, 217) à une précontrainte vers sa position de repos, en ce que, dans la partie mobile (111, 211), il est disposé un élément télescopique (118, 218) qui est soumis par un second ressort (119, 219), agissant dans la même direction, à une précontrainte s'exerçant vers sa position de repos, et en ce que le second ressort (119, 219) est extrêmement plus dur que le premier ressort (117, 217).

27. Amplificateur d'effort de freinage à dépression suivant l'une des revendications 21 à 26, caractérisé en ce que la valve de raccordement de dépression (109) comprend une tubulure d'aspiration (113, 213) qui fait un angle préfixé avec le conduit d'aspiration (114, 214), de sorte qu'on peut déplacer cette tubulure d'aspiration (113, 213) en rotation vis-à-vis du boîtier de valve (115, 215).

28. Amplificateur d'effort de freinage à dépression suivant l'une des revendications 21 à 27, caractérisé en ce qu'il est prévu un dispositif électrique de raccordement (237) qui est fixé sur le boîtier de valve (215) et est agencé de façon que sa position de fixation puisse être déplacée en rotation vis-à-vis du boîtier de valve (215).

29. Amplificateur d'effort de freinage à dépression suivant la revendication 28, caractérisé en ce que le boîtier de valve (215) comprend plusieurs anneaux de frottement (234) qui sont reliés électriquement au capteur (210) et en ce que le dispositif de raccordement (237) comprend un nombre correspondant de contacts de frottement (235, 236) prenant appui sur ces anneaux de frottement (234).
